# EUROPEAN PATENT APPLICATION

(11) **EP 4 752 410 A1**
(43) Date of publication of application: **03.06.2026**
(21) Application number: 24844513.2
(22) Date of filing: 26.06.2024
(51) Int. Cl.: F16K 11/02

(54) **REVERSING VALVE AND FUEL CELL SYSTEM**

(30) Priority: 26.07.2023 CN 202310922300
(71) Applicant: Dongfeng Motor Group Co., Ltd., Wuhan, Hubei 430000 (CN)
(72) Inventor: LI, Xuerui, Wuhan, Hubei 430000 (CN); MA, Yi, Wuhan, Hubei 430000 (CN); SHI, Mingtao, Wuhan, Hubei 430000 (CN); HUANG, Hao, Wuhan, Hubei 430000 (CN); LI, Liekai, Wuhan, Hubei 430000 (CN)
(74) Representative: Santarelli
(86) International application number: PCT/CN2024/101518
(87) International publication number: WO 2025/020819

(57) **Abstract**

Disclosed are a reversing valve and a fuel cell system. The reversing valve comprises: a valve seat (100), the valve seat (100) being internally provided with a first flow channel (110) and a second flow channel (120) in communication with and perpendicular to the first flow channel, the valve seat (100) being provided with a first inlet (111) and a first outlet (112) both in communication with the first flow channel (110), and the valve seat (100) being provided with a second inlet (121) in communication with the second flow channel (120); and a valve core (200), the valve core (200) being internally provided with a third flow channel (210) coaxial with the second flow channel (120), and the valve core (200) being provided with a valve core inlet (211) and a valve core outlet (212) both in communication with the third flow channel (210). An arrangement position of the valve core inlet (211) corresponds to the arrangement position of the second inlet (121), and the valve core (200) is movably arranged in the second flow channel (120), such that the valve core outlet (212) is switched between a position corresponding to the first outlet (112) and a position staggered with the first outlet (112). The reversing valve automatically switches the position of the valve core outlet in the valve seat according to a pressure size, thus automatically achieving flow channel switching. The reversing valve does not have a relatively narrow flow channel during use, and has a small flow resistance and a small pressure loss.

## Description

### CROSS-REFERENCE TO RELATED APPLICATIONS

The present application claims priority to Chinese Patent Application No. 202310922300.4, filed on July 26, 2023, which is incorporated herein by reference in its entirety.

### Technical Field

The present application belongs to the technical field of fuel cells, and particularly relates to a reversing valve and a fuel cell system.

### Background of the Invention

In the related art, reversing valves generally adopt spring-type or magnetic suction-type structures. To realize reversing, fluids need to overcome the elastic force of a spring to lift up a valve core, and a channel between the valve core and a valve seat is relatively narrow, resulting in a large flow resistance for the fluids passing through.

It should be noted that information disclosed in the aforementioned background section is only intended to strengthen the understanding of the background of the present application, and thus may include information that does not constitute the prior art known to a person skilled in the art.

### Summary of the Invention

The present application is intended to at least solve the technical problem of a relatively large flow resistance existing in traditional reversing valves. To this end, the present application provides a reversing valve and a fuel cell system.

Technical solutions of the present application provide a reversing valve. The control valve includes:
a valve seat, the valve seat being internally provided with a first flow channel and a second flow channel in communication with and perpendicular to the first flow channel, the valve seat being provided with a first inlet and a first outlet both in communication with the first flow channel, and the valve seat being provided with a second inlet in communication with the second flow channel; and
a valve core, the valve core being internally provided with a third flow channel coaxial with the second flow channel, and the valve core being provided with a valve core inlet and a valve core outlet both in communication with the third flow channel, where an arrangement position of the valve core inlet corresponds to an arrangement position of the second inlet, and the valve core is movably arranged in the second flow channel, such that the valve core outlet is switched between a position corresponding to the first outlet and a position staggered with the first outlet.

In some preferred technical solutions, the reversing valve further includes:
a holder, the holder being arranged in the second flow channel, and the holder being provided with a through hole corresponding to the second inlet; and
an elastic reset member, the elastic reset member being connected between the valve core and the holder, and the elastic reset member keeping the valve core outlet in the position staggered with the first outlet by means of a preload force.

In some preferred technical solutions, the reversing valve further includes a circlip, a circlip groove is formed in the second flow channel, the circlip groove is located between the holder and the valve core, and the circlip groove is configured to accommodate the circlip.

In some preferred technical solutions, an anti-disengagement retainer ring is arranged in the second flow channel, and the anti-disengagement retainer ring is located on a side of the holder opposite to the circlip groove.

In some preferred technical solutions, a cushion pad is arranged on an inner side of a side wall of the valve seat corresponding to the second inlet.

In some preferred technical solutions, the side wall of the valve seat corresponding to the second inlet is a movable side wall, and the movable side wall is detachably arranged on the valve seat.

In some preferred technical solutions, a limit pin is arranged on the valve seat, and a positioning groove matched with the limit pin is formed on the valve core; and/or a limit groove is formed on the valve seat, and a positioning pin matched with the limit groove is arranged on the valve core.

In some implementations, a limit pin hole is formed in the second flow channel, and the limit pin is connected to the limit pin hole in an interference fit manner.

In some implementations, a length of the limit groove and/or the positioning groove is greater than or equal to a movement distance of the valve core relative to the second flow channel.

The embodiments of the present application further provide a fuel cell system. The fuel cell system includes a fuel cell and the aforementioned reversing valve.

The embodiments of the present application at least have the following beneficial effects:
According to the aforementioned reversing valve, by arranging the valve core movably in the second flow channel, the valve core can automatically switch the position of the valve core outlet in the valve seat according to a pressure size, so as to switch a conduction state between the first flow channel and the second flow channel. Thus, the reversing valve automatically achieves flow channel switching without the need for an electronic control device, resulting in a simple structure and compact size of the reversing valve. Meanwhile, neither of the two flow channels of the reversing valve is relatively narrow during use, and the reversing valve has a small flow resistance and a small pressure loss.

### Brief Description of the Drawings

To describe the technical solutions in embodiments of the present application more clearly, the following briefly describes the accompanying drawings required for describing the embodiments. Apparently, the accompanying drawings in the following description show merely some embodiments of the present application, and a person of ordinary skill in the art may still derive other drawings from these accompanying drawings without creative efforts.
FIG. 1 is a top view of a reversing valve according to an embodiment of the present application;
FIG. 2 shows a sectional view taken along A-A of the reversing valve in FIG. 1 when it is in a first state;
FIG. 3 shows a sectional view taken along A-A of the reversing valve in FIG. 1 when it is in a second state;
FIG. 4 shows a sectional view taken along B-B of the reversing valve in FIG. 1 when it is in a first state;
FIG. 5 shows a sectional view taken along B-B of the reversing valve in FIG. 1 when it is in a second state;
FIG. 6 shows a sectional view taken along A-A of a valve seat of the reversing valve in FIG. 1;
FIG. 7 shows a sectional view taken along A-A of a valve core of the reversing valve in FIG. 1;
FIG. 8 shows a schematic diagram of a three-dimensional structure of a holder of the reversing valve in FIG. 2;
FIG. 9 is a schematic diagram of a working process of a fuel cell system according to an embodiment of the present application when a reversing valve is in a first state; and
FIG. 10 is a schematic diagram of a working process of a fuel cell system according to an embodiment of the present application when a reversing valve is in a second state.

### Reference numerals in the accompanying drawings:

1000: reversing valve; 100: valve seat; 110: first flow channel; 111: first inlet; 112: first outlet; 120: second flow channel; 121: second inlet; 130: anti-disengagement retainer ring; 140: circlip groove; 150: cushion pad; 160: movable side wall; 170: limit pin; 171: limit pin hole; 180: sealing ring groove; 181: sealing ring; 190: connector; 200: valve core; 210: third flow channel; 211: valve core inlet; 212: valve core outlet; 220: positioning groove; 230: valve core side wall; 231: side wall chamfer; 240: valve core top wall; 241: top wall chamfer; 251: connecting column; 252: connecting hook hole; 300: holder; 311: outer frame; 312: connecting frame; 320: through hole; 331: fixing hook hole; 332: fixing post; 400: elastic reset member; 500: circlip; 01: switching valve; 02: medium-pressure sensor; 03: proportional valve; 04: ejector; 05: secondary flow inlet of the ejector; 06: stack inlet low-pressure sensor; 07: stack inlet for anode reaction gas entering; 08: stack; 09: stack outlet for anode reaction gas exiting; 10: stack outlet low-pressure sensor; 11: gas-liquid separator; 12: gas discharge tee; 13: nitrogen discharge valve; 14: drain valve; 15: mixed discharge device; 16: circulating pump; 19: first tee outlet; 20: second tee outlet.

### Detailed Description of Embodiments

The technical solutions in the embodiments of the present application will be clearly and completely described below with reference to the accompanying drawings in the embodiments of the present application. Apparently, the described embodiments are only some rather than all of the embodiments of the present application. All other embodiments obtained by a person of ordinary skill in the art based on the embodiments of the present application without creative efforts shall fall within the protection scope of the present application.

In addition, reference numerals and/or reference letters can be repeated in different examples in the present application for the purpose of simplicity and clarity, which does not indicate the relationship between the various embodiments and/or settings discussed. In addition, the present application provides examples of various specific processes and materials, but those of ordinary skill in the art may be aware of the application of other processes and/or the use of other materials.

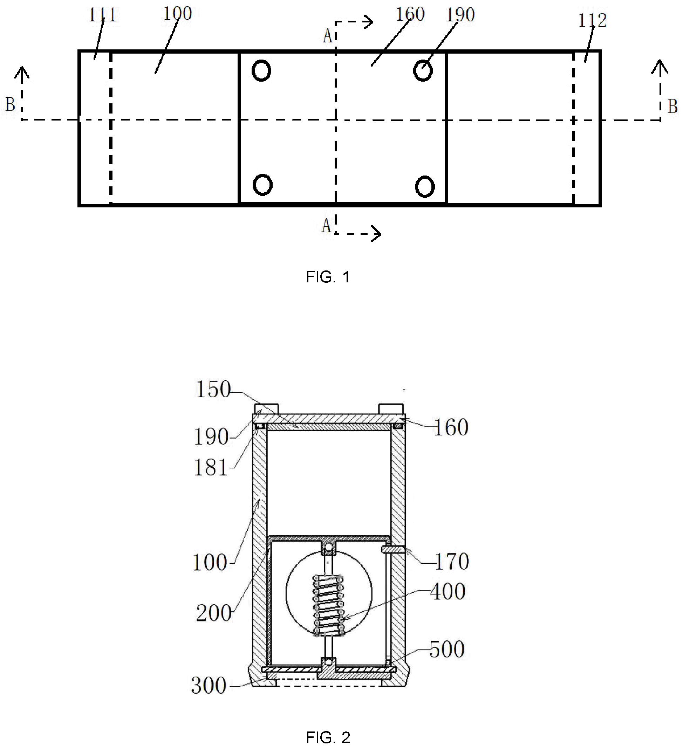

The present application will be described below with reference to the accompanying drawings and specific embodiments:
The embodiments of the present application provide a reversing valve 1000. As shown in FIG. 1 to FIG. 8, the reversing valve 1000 includes a valve seat 100 and a valve core 200. The valve seat 100 is internally provided with a first flow channel 110 and a second flow channel 120 in communication with and perpendicular to the first flow channel 110, the valve seat 100 is provided with a first inlet 111 and a first outlet 112 both in communication with the first flow channel 110, and the valve seat 100 is provided with a second inlet 121 in communication with the second flow channel 120. The valve core 200 is internally provided with a third flow channel 210 coaxial with the second flow channel 120, and the valve core 200 is provided with a valve core inlet 211 and a valve core outlet 212 both in communication with the third flow channel 210. An arrangement position of the valve core inlet 211 corresponds to an arrangement position of the second inlet 121, and the valve core 200 is movably arranged in the second flow channel 120, such that the valve core outlet 212 is switched between a position corresponding to the first outlet 112 and a position staggered with the first outlet 112.

In the reversing valve 1000 of the embodiments of the present application, by arranging the valve core 200 movably in the second flow channel 120, the valve core 200 can automatically switch the position of the valve core outlet 212 in the valve seat 100 according to a pressure size, so as to switch a conduction state between the first flow channel 110 and the second flow channel 120. Thus, the reversing valve 1000 automatically achieves flow channel switching without the need for an electronic control device, resulting in a simple structure and compact size of the reversing valve 1000. Meanwhile, neither of the two flow channels of the reversing valve 1000 is relatively narrow during use, and the reversing valve 1000 has a small flow resistance and a small pressure loss.

In the related art, the reversing valve 1000 generally adopt a spring-type or magnetic suction-type reversing valve 1000. To realize reversing, fluids need to overcome the elastic force or magnetic attraction force of a spring to push the valve core 200 to move, so as to expose a circular channel between the valve core 200 and the valve seat 100. However, the channel between the valve core 200 and the valve seat 100 is relatively narrow, resulting in defects of a large flow resistance and a high pressure loss for the fluids passing through the channel. When this type of reversing valve 1000 is applied in a fuel cell system, an excessive flow resistance will offset the pressure boost generated by a circulating pump 16 or an ejector 04, resulting in poor circulation performance of an anode reaction gas, which further impairs the performance of the fuel cell system. In addition, in the related art, the adopted reversing valve 1000 is a check valve. In the fuel cell system, it is necessary to use more than two check valves, which will result in a relatively bulky volume of the fuel cell system.

For example, a vertical check valve in the related art includes a valve body internally provided with a valve cavity, a spherical valve disc arranged inside the valve cavity, and a valve seat 100 that is connected to the spherical valve disc in a matching and sealing manner. The valve body includes an upper valve body provided with a fluid outlet and a lower valve body provided with a fluid inlet. The valve seat 100 is arranged at the fluid inlet. An accommodating groove for accommodating the spherical valve disc is formed at the position of the upper valve body directly above the fluid inlet. The spherical valve disc and the valve seat 100 are made of magnetic materials, and the spherical valve disc is reset by a magnetic force and is in contact seal with the valve seat 100. On the one hand, this vertical check valve is a unidirectional flow valve structure. In the fuel cell system, it is necessary to install more than two vertical check valves and corresponding pipelines, which will result in a relatively bulky volume of the fuel cell system. On the other hand, the anode reaction gas needs to continuously lift up the valve core 200, and the flow channel between the valve core 200 and the valve seat 100 is narrow, causing high resistance during circulation of the anode reaction gas.

In some embodiments, the reversing valve 1000 proposed in the present application can be applied to a circulation structure of the anode reaction gas in the fuel cell system, so as to reduce the flow resistance of the anode reaction gas during circulation, and decrease the compression of the anode reaction gas, thereby improving the overall performance of the fuel cell system.

In other embodiments, the reversing valve 1000 of the present application can also be applied to other fluid systems for preventing fluid backflow and changing fluid flow paths. Those skilled in the art can adaptively configure the reversing valve 1000 according to a fluid flow direction of the fluid system.

With the increasingly severe global environmental and energy issues, vehicles of fuel cells are regarded as the most promising energy power devices in the future due to their advantages such as zero pollution, high energy conversion efficiency, and wide range of raw material sources. In the following embodiments of the present application, hydrogen is taken as an example of the anode reaction gas to provide an illustrative description of the reversing valve 1000 and the fuel cell system equipped with the check valve.

In the fuel cell system, considering aspects such as power demand, component performance, and efficiency, a circulation structure of the anode reaction gas in a vehicle-mounted fuel cell system may adopt a circulation mode using a circulating pump 16, an ejector 04, or a combination of the circulating pump 16 and the ejector 04. Compared with the ejector 04, the circulating pump 16 exhibits favorable circulation performance over a full operating condition range and features active adjustability. Compared with the circulating pump 16, the ejector 04 has the advantages of simple structure, reliable operation, low noise, and no additional power consumption. In a medium and high power range, the ejector 04 can achieve a favorable ejection coefficient and generate sufficient pressure boost, so as to pressurize the incompletely reacted anode reaction gas at the anode after gas-liquid separation, and then deliver the anode reaction gas to a stack inlet for anode reaction gas entering 07 of the fuel cell for participation in a next electrochemical reaction. However, in a low power range, the ejector 04 has inherent problems such as poor ejection coefficient, which leads to insufficient ejection capacity and insufficient pressure boost of the anode reaction gas, thereby impairing the performance of the entire fuel cell system. Therefore, in practical applications, the anode reaction gas generally adopts combined circulation modes such as series connection, parallel connection, or a combination of series and parallel connections of the circulating pump 16 and the ejector 04. This allows the fuel cell system to use the circulating pump 16 alone in the low power range to pressurize the incompletely reacted anode reaction gas at the anode after gas-liquid separation, and then deliver the anode reaction gas to the stack inlet for anode reaction gas entering 07 of the fuel cell for participation in a next electrochemical reaction. In the medium and high power range, the circulating pump 16 stops operating, and the ejector 04 is used alone to pressurize the incompletely reacted anode reaction gas at the anode after gas-liquid separation, and then deliver the anode reaction gas to the stack inlet for anode reaction gas entering 07 of the fuel cell for participation in a next electrochemical reaction. In particular, the parallel circulation communication mode of the circulating pump 16 and the ejector 04 does not restrict a structural form of the circulating pump 16, and can ensure the anode reaction gas has favorable circulation performance over the full operating condition range, thus featuring a broader scope of application.

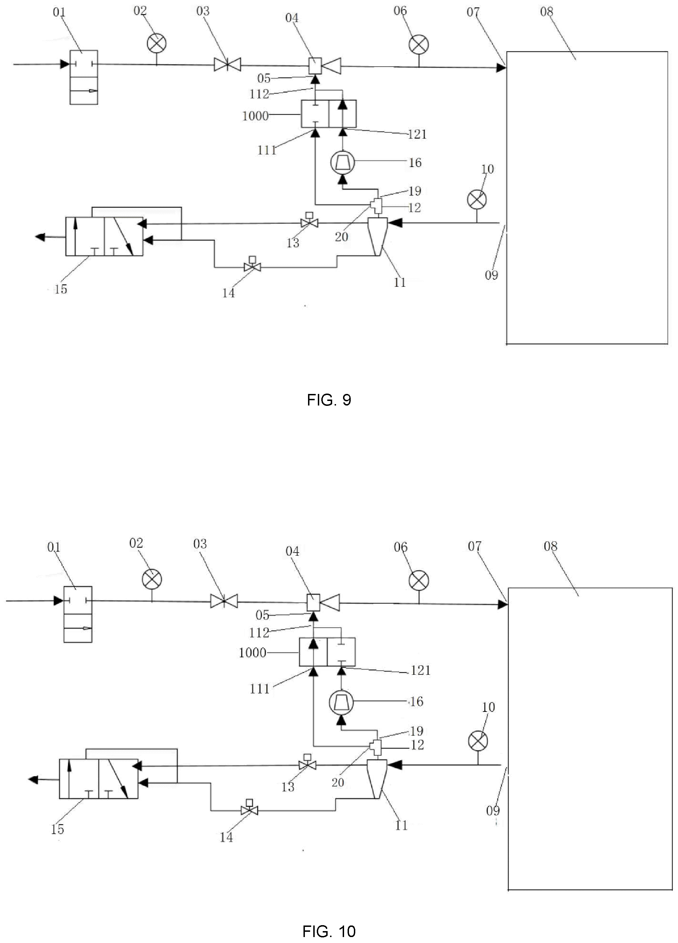

In some embodiments, as shown in FIG. 9 and FIG. 10, in a circulation structure of the anode reaction gas where the circulating pump 16 and the ejector 04 are used in combination, it is necessary to arrange the reversing valve 1000 in the circulation structure to prevent the backflow of the anode reaction gas, and the reversing valve can separately control the on-off of a pressurization path of the circulating pump 16 and the on-off of a heating path of the ejector 04 of the anode reaction gas. When the circulating pump 16 operates in the low power range, circulating anode reaction gas separated by a gas-liquid separator 11 enters the circulating pump 16, is pressurized by a rotor or an impeller, and then is delivered to an anode stack inlet pipeline. In this case, the anode stack inlet pipeline, the ejector 04, the circulating pump 16, and an outlet of the gas-liquid separator 11 are connected in series. If there is no reversing valve 1000 device between them, high-pressure anode reaction gas generated by the circulating pump 16 will flow back to an inlet of the gas-liquid separator 11, resulting in failure to build up a pressure of the stack inlet for anode reaction gas entering 07 and waste of power consumption of the circulating pump 16. Therefore, it is necessary to install a reversing valve 1000 device on a pipeline between the ejector 04 and the circulating pump 16. Likewise, when the ejector 04 operates in the medium and high power range, circulating anode reaction gas separated by a gas-liquid separator 11 enters the ejector 04, is pressurized by the ejector 04, and then is delivered to an anode stack inlet pipeline. In this case, the anode stack inlet pipeline, the ejector 04, and an outlet of the gas-liquid separator 11 are connected in series. If there is no reversing valve 1000 device between them, high-pressure anode reaction gas generated by the ejector 04 will flow back to an inlet of the gas-liquid separator 11, resulting in failure to build up a pressure of the stack inlet for anode reaction gas entering 07 and waste of pressure boost of the ejector 04. Therefore, it is necessary to install a reversing valve 1000 device on a pipeline between the ejector 04 and the gas-liquid separator 11.

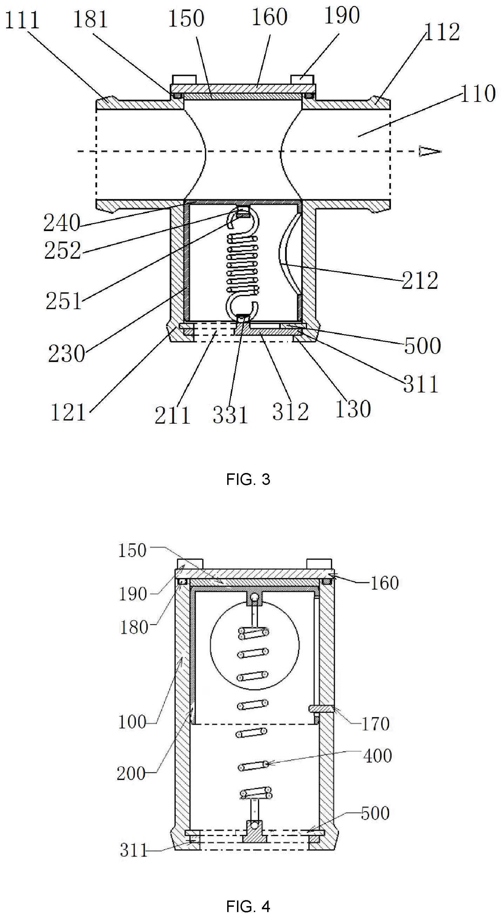

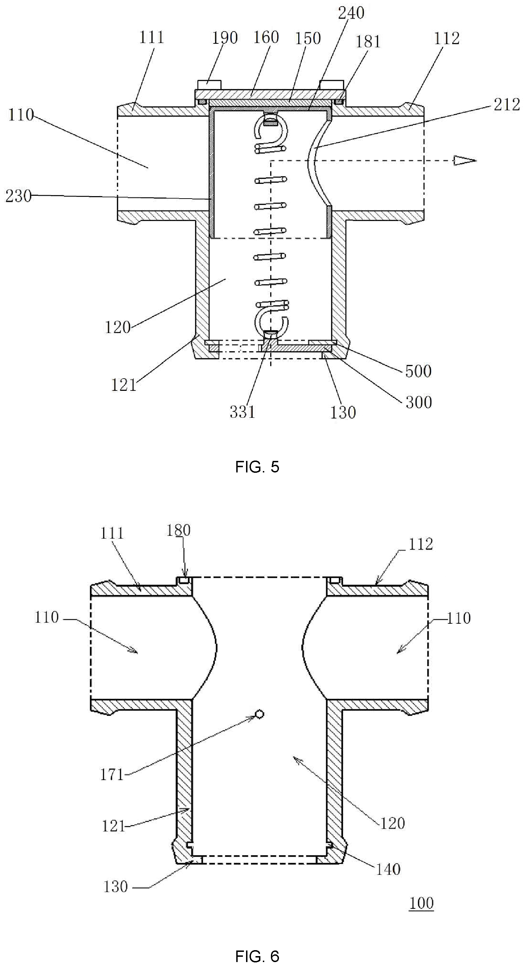

In the above-described embodiments, the first inlet 111, the second inlet 121, and the first outlet 112 of the reversing valve 1000 are respectively in communication with pipelines of the anode reaction gas. The anode reaction gas can enter the check valve through the first inlet 111 or the second inlet 121, and then is discharged from the check valve through the first outlet 112. When the pressure in an anode reaction gas circulation pipeline is relatively low (i.e., the fuel cell system operates in the low power range), as shown in FIG. 3, the pressure of the anode reaction gas is insufficient to overcome the resistance of the valve core 200, thus keeping the valve core 200 in a state being located inside the second flow channel 120. The valve core outlet 212 of the valve core 200 is blocked off by the outer wall of the valve seat 100, and at the same time, the second inlet 121 of the valve seat 100 is blocked off by the valve core 200, which blocks off and disconnects a flow path of the anode reaction gas in the first flow channel 110. In this case, the anode reaction gas enters the first flow channel 110 of the check valve through the first inlet 111 and then is discharged from the check valve through the first outlet 112 in communication with the first flow channel 110. When the pressure in the anode reaction gas circulation pipeline is relatively high (i.e., the fuel cell system operates in the medium and high power range), as shown in FIG. 5, the pressure of the anode reaction gas can overcome the resistance of the valve core 200 and drive the valve core 200 to move inside the second flow channel 120 until the valve core 200 moves to a junction of the first flow channel 110 and the second flow channel 120. In this case, the part of the first flow channel 110 of the valve seat 100 facing a direction of the first inlet 111 is blocked off by the valve core 200, and the valve core outlet 212 of the valve core 200 is in communication with the part of the first flow channel 110 facing a direction of the first outlet 112. Meanwhile, the valve core 200 avoids the second inlet 121 of the second flow channel 120, therefore, the anode reaction gas enters the second flow channel 120 through the second inlet 121, then flows into the part of the first flow channel 110 facing the direction of the first outlet 112 via the valve core outlet 212 of the valve core 200, and finally is discharged from the check valve through the first outlet 112.

When the reversing valve 1000 of the present application is applied to the anode reaction gas circulation structure of the fuel cell, it can replace two reversing valves 1000 that would otherwise be required for the parallel connection of the ejector 04 and the circulating pump 16, with a single reversing valve 1000 according to the embodiments of the present application. This enables the reversing valve 1000 to switch flow paths of the anode reaction gas in the circulation structure. Moreover, two flow paths of the anode reaction gas feature extremely low flow resistance, which is nearly zero. Driven by a pressure difference of the anode reaction gas, the reversing valve 1000 does not require a solenoid valve for control, and can automatically regulate the opening or closing of the two anode reaction gas flow paths according to operating conditions of the fuel cell system. The two anode reaction gas flow paths are an anode reaction gas flow path with the ejector 04 and an anode reaction gas flow path with the circulating pump 16 respectively and can also effectively prevent the backflow of the anode reaction gas.

In some embodiments, as shown in FIG. 1 to FIG. 5, the valve seat 100 may be of a rectangular parallelepiped structure as a whole. A first flow channel 110 and a second flow channel 120 are arranged inside the valve seat 100, where the second flow channel 120 is in communication with a middle part of the first flow channel 110 to form a T-shaped structure, and an axis of the second flow channel 120 is perpendicular to that of the first flow channel 110. The first inlet 111 and the first outlet 112 are located at two ends of the first flow channel 110, and the second inlet 121 is located at one end of the second flow channel 120 that is not in communication with the first flow channel 110.

In some embodiments, as shown in FIG. 3 and FIG. 5, structures such as a barb or a pagoda joint may be respectively arranged at the first inlet 111, the second inlet 121, and the first outlet 112, so as to facilitate communication with pipelines and prevent the pipelines from falling off after communication.

In some embodiments, the first flow channel 110 and the second flow channel 120 may be cylindrical flow channels, and the first inlet 111, the second inlet 121, and the outlet may be circular opening structures.

In other embodiments, the first flow channel 110 and the second flow channel 120 may also be rectangular parallelepiped flow channel structures.

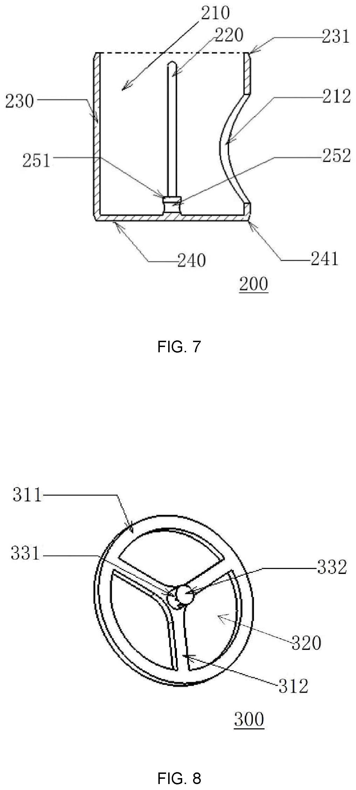

In some embodiments, as shown in FIG. 7, the valve core 200 includes a valve core side wall 230 and a valve core top wall 240. The valve core side wall 230 is arranged around the valve core top wall 240 to form a cylindrical structure with one end open; and an opening opposite to the valve core top wall 240 serves as the valve core inlet 211. Meanwhile, a through hole 320 is formed on the valve core side wall 230 as the valve core outlet 212, which means that an axis of the valve core inlet 211 is perpendicular to that of the valve core outlet 212.

In some embodiments, as shown in FIG. 7, the valve core 200 may be of a cylindrical structure; in other words, the valve core side wall 230 is arranged around the valve core top wall 240 to form a hollow cylindrical structure. This hollow cylindrical structure matches with the second flow channel 120 of the valve seat 100, such that an outer diameter of the valve core side wall 230 is equal to an inner diameter of the second flow channel 120 and a certain clearance fit tolerance is formed. In this way, a clearance fit structure is formed between the valve core 200 and the second flow channel 120 of the valve seat 100, which ensures that the valve core 200 can move smoothly inside the second flow channel 120 of the valve seat 100 under the premise of a certain sealing condition.

In other embodiments, the valve core 200 may also be of a rectangular parallelepiped structure or other structures, provided that the valve core side wall 230 matches with an internal structure of the second flow channel 120 of the valve seat 100.

In some embodiments, as shown in FIG. 7, a top wall chamfer 241 may be arranged at the valve core top wall 240, and a side wall chamfer 231 corresponding to the top wall chamfer 241 may be arranged at the valve core side wall 230. In other words, the top wall chamfer 241 and the side wall chamfer 231 are respectively arranged at two opposite ends of the valve core 200 in its movement direction, so as to serve as a guide for the valve core 200 in the movement direction, thus ensuring the smooth movement of the valve core 200 inside the second flow channel 120 and avoiding jamming or similar phenomena.

As an optional implementation, an elastic reset member 400 may be arranged between the valve core 200 and the valve seat 100. An elastic reset member 400 with appropriate stiffness and preload force is selected to design a condition for the movement of the valve core 200 relative to the valve seat 100. Specifically, a communication condition between the second inlet 121 and the first outlet 112 is designed by selecting an elastic reset member 400 with appropriate stiffness and preload force, so as to achieve switching between the two anode reaction gas flow paths and complete the opening and closing of the two flow paths. In other words, it achieves the operation switching between the circulating pump 16 and the ejector 04, which can enable the volume of the two anode reaction gas paths compact without adding additional electronic control devices.

As an optional implementation, as shown in FIG. 1 to FIG. 8, the reversing valve 1000 further includes a holder 300 and an elastic reset member 400. The holder 300 is arranged inside the second flow channel 120 and the holder 300 is provided with a through hole 320 corresponding to the second inlet 121. The elastic reset member 400 is connected between the valve core 200 and the holder 300, and the elastic reset member 400 keeps the valve core outlet 212 in the position staggered with the first outlet 112 by means of a preload force.

In some embodiments, as shown in FIG. 1 to FIG. 8, the holder 300 is disposed inside the second flow channel 120, and the elastic reset member 400 is connected between the holder 300 and the valve core 200. The preload force of the elastic reset member 400 keeps the valve core outlet 212 of the valve core 200 to be staggered from the first outlet 112; in other words, when the reversing valve 1000 is not in operation, the reversing valve 1000 can maintain a state where the first inlet 111 is in communication with the first outlet 112. Meanwhile, the holder 300 is provided with the through hole 320 corresponding to the second inlet 121, therefore, fluids can enter the valve core inlet 211 via the through hole 320.

When a fluid at a certain pressure enters the second flow channel 120 through the second inlet 121, the fluid passes through the through hole 320 and the valve core inlet 211, enters the interior of the valve core 200, and acts on the valve core top wall 240 of the valve core 200. A pressure generated by the fluid is denoted as P, an area of the valve core top wall 240 is denoted as S, and a thrust force generated by the fluid is denoted as F1, where F1= P·S. Meanwhile, a stiffness coefficient of the elastic reset member 400 is denoted as k, and a stroke of the valve core 200 when the valve core outlet 212 is fully exposed to correspond to the first outlet 112 is denoted as L. When F1 > F_{preload} + kL, the thrust force generated by the fluid overcomes the sum of the preload force and tensile force of the elastic reset member 400, and the valve core 200 is push to a position where the valve core outlet 212 is fully exposed to correspond to the first outlet 112. The valve core outlet 212 can be fully exposed to correspond to the first outlet 112, at which point the second inlet 121 is in communication with the first outlet 112 and the first inlet 111 is disconnected from the first outlet 112. When the pressure of the fluid entering the second flow channel 120 through the second inlet 121 decreases and F1 **<** F_{preload} + kL, the valve core 200 moves relative to the valve seat 100 toward a direction of the second inlet 121 under the action of the elastic reset member 400 until the valve core 200 moves to a state where the valve core outlet 212 is staggered from the first outlet 112 under the action of the elastic reset member 400. At this point, the first inlet 111 resumes communication with the first outlet 112 and the second inlet 121 is disconnected from the first outlet 112.

In some embodiments, as shown in FIG. 7, a connecting column 251 is provided on the valve core top wall 240, and the connecting column 251 is used to connect to the elastic reset member 400, so as to achieve the connection between the valve core 200 and the elastic reset member 400. Optionally, a connecting hook hole 252 is formed on the connecting column 251, and the elastic reset member 400 is connected to the connecting column 251 through the connecting hook hole 252, thereby achieving the connection between the elastic reset member 400 and the valve core 200.

In some embodiments, as shown in FIG. 8, the holder 300 includes an outer frame 311 and a plurality of connecting frames 312 disposed inside the outer frame 311. a through hole 320 is formed between the outer frame 311 and each of the connecting frames 312, and the through hole 320 is used to allow the fluids to pass through the holder 300 and enter the inlet of the valve seat 100. A fixing post 332 may be provided on the holder 300; for example, the fixing post 332 is disposed on the plurality of connecting frames 312. The fixing post 332 is used to connect to the elastic reset member 400, so as to achieve the connection between the holder 300 and the elastic reset member 400. Optionally, a fixing hook hole 331 is provided on the fixing post 332, and the elastic reset member 400 is connected to the fixing post 332 via the fixing hook hole 331.

In some embodiments, as shown in FIG. 2 to FIG. 5, the connecting column 251 of the valve core 200 corresponds to the fixing post 332 of the holder 300, such that an axis of the elastic reset member 400 between the connecting column 251 and the fixing post 332 is parallel to or coincident with the axis of the second flow channel 120. Therefore, the acting force generated by the elastic reset member 400 is parallel to the axis of the second flow channel 120, which enables the valve core 200 to move along an axial direction of the second flow channel 120 via the elastic reset member 400 and prevents the valve core 200 from shifting or deflecting during movement.

In some embodiments, as shown in FIG. 2 to FIG. 5, the outer frame 311 of the holder 300 matches with the structure of the second flow channel 120. When the second flow channel 120 is a cylindrical flow channel, the outer frame 311 of the holder 300 is a circular frame; and when the second flow channel 120 is a rectangular parallelepiped flow channel, the outer frame 311 of the holder 300 may be a rectangular frame.

In some embodiments, dimensions of the outer frame 311 of the holder 300 match with those of the second flow channel 120 and a clearance tolerance fit is formed, thereby enabling the formation of a clearance fit connection structure between the holder 300 and the second flow channel 120.

In some embodiments, optionally, a cross-section of the outer frame 311 of the holder 300 is rectangular, which can enable the outer frame 311 of the holder 300 to be horizontal inside the second flow channel 120 and prevent the outer frame 311 from deflecting relative to the second flow channel 120.

As an optional implementation, as shown in FIG. 2 to FIG. 5, the reversing valve 1000 further includes a circlip 500, a circlip groove 140 is formed in the second flow channel 120, the circlip groove 140 is located between the holder 300 and the valve core 200, and the circlip groove 140 is configured to accommodate the circlip 500.

In some embodiments, as shown in FIG. 2 to FIG. 5, the circlip 500 is arranged inside the second flow channel 120, and the holder 300 is fixed inside the second flow channel 120 by means of the circlip 500, such that the holder 300 is fixed relative to the second flow channel 120, thereby serving to fix one end of the elastic reset member 400 by means of the holder 300.

In some embodiments, to enable the holder 300 to stably fix one end of the elastic reset member 400, the holder 300 as a whole should be relatively firmly fixed inside the second flow channel 120, and it is necessary to prevent the holder 300 from moving relative to the second flow channel 120. A circlip groove 140 is formed inside the second flow channel 120, and correspondingly, the circlip 500 is clamped into the circlip groove 140, such that the circlip 500 is positioned between the valve core 200 and the holder 300. In this way, the circlip 500 limits and fixes the holder 300, which prevents the holder 300 from moving toward the valve core 200 under the drive of the elastic reset member 400.

In some other embodiments, the holder 300 may also be fixed inside the second flow channel 120 by other means, such as elastic buckles, limiting connectors 190, and other structures. Those skilled in the art can make appropriate selections according to the structural characteristics of the second flow channel 120 and the holder 300, which will not be described here.

As an optional implementation, as shown in FIG. 2 to FIG. 5, an anti-disengagement retainer ring 130 is arranged inside the second flow channel 120, and the anti-disengagement retainer ring 130 is located on a side of the holder 300 opposite to the circlip groove 140.

In some embodiments, the anti-disengagement retainer ring 130 is arranged inside the second flow channel 120, such that the anti-disengagement retainer ring 130 protrudes relative to the second flow channel 120, which can be used to prevent the holder 300 from slipping out of the second flow channel 120. An inner diameter of the anti-disengagement retainer ring 130 is smaller than that of the second flow channel 120, such that the anti-disengagement retainer ring 130 protrudes relative to the second flow channel 120 and can prevent the holder 300 from slipping out of the second flow channel 120.

In some embodiments, as shown in FIG. 2 to FIG. 5, the anti-disengagement retainer ring 130 and the circlip 500 are located on both sides of the holder 300 respectively, which can play a role in fixing the holder 300 inside the second flow channel 120 from two directions. In some embodiments, a distance between the anti-disengagement retainer ring 130 and the circlip groove 140 is greater than or equal to a thickness of the holder 300.

In some embodiments, the anti-disengagement retainer ring 130 and the valve seat 100 are of an integrated structure; that is, the anti-disengagement retainer ring 130 is manufactured integrally with the valve seat 100.

In some embodiments, as shown in FIG. 2 to FIG. 5, optionally, the anti-disengagement retainer ring 130 is located at a position corresponding to the second inlet 121 inside the second flow channel 120. As an optional implementation, as shown in FIG. 2 to FIG. 5, a cushion pad 150 is arranged on an inner side of a side wall of the valve seat 100 corresponding to the second inlet 121.

In some embodiments, as shown in FIG. 2 to FIG. 5, the valve core 200 moves inside the second flow channel 120. When the valve core 200 moves to a position where the valve core outlet 212 corresponds to the first outlet 112, the valve core 200 can come into contact with the side wall of the valve seat 100 corresponding to the second inlet 121. To prevent collision between the valve core 200 and the valve seat 100, the cushion pad 150 is arranged on the inner side of the side wall of the valve seat 100 corresponding to the second inlet 121. The cushion pad 150 can buffer a collision stress exerted on the valve seat 100 by the valve core 200, thus avoiding damage to the valve seat 100 and/or generation of collision noise.

As an optional implementation, the side wall of the valve seat 100 corresponding to the second inlet 121 is a movable side wall 160, and the movable side wall 160 is detachably arranged on the valve seat 100.

In some embodiments, as shown in FIG. 1 to FIG. 5, to easily mount structures such as the valve core 200, the holder 300, and the circlip 500 into the valve seat 100, the side wall of the valve seat 100 corresponding to the second inlet 121 may be configured as the movable side wall 160, and the movable side wall 160 is detachably arranged on the valve seat 100. After the movable side wall 160 is removed, the holder 300, the circlip 500, the elastic reset member 400, and the valve core 200 can be sequentially arranged inside the second flow channel 120, and then the movable side wall 160 is mounted on the valve seat 100, thereby completing the assembly of the reversing valve 1000.

In some embodiments, a number of fixing connection holes may be respectively formed at corresponding positions on a main body of the valve seat 100 and the movable side wall 160, and the movable side wall 160 is fixed to the main body of the valve seat 100 by means of the connectors 190.

In some embodiments, to ensure an overall tightness of the valve seat 100, a sealing ring groove 180 corresponding to the movable side wall 160 is formed on the main body of the valve seat 100, and a sealing ring 181 is arranged in the sealing ring groove 180. A movable cover plate is pressed against the sealing ring 181, so that a gap between the movable side wall 160 and the main body of the valve seat 100 is sealed by the sealing ring 181, thus preventing the reversing valve 1000 from leaking at the movable side wall 160.

In some embodiments, the movable side wall 160 achieves detachable connection between the movable side wall 160 and the main body of the valve seat 100 through at least four evenly distributed fixing connection holes.

As an optional implementation, as shown in FIG. 2, FIG. 4, and FIG. 7, a limit pin 170 is provided on the valve seat 100, and a positioning groove 220 matching the limit pin 170 is formed on the valve core 200; and/or, a limit groove is formed on the valve seat 100, and a positioning pin matching the limit groove is provided on the valve core 200.

As shown in FIG. 2, FIG. 4, and FIG. 7, the limit pin 170 and/or the limit groove are located in the second flow channel 120 or at a position where the first flow channel 110 corresponds to the second flow channel 120.

In some embodiments, as shown in FIG. 2, FIG. 4, and FIG. 7, a limit pin 170 is disposed in the second flow channel 120, such that the limit pin protrudes relative to the interior of the second flow channel 120. A protruding direction of the limit pin is perpendicular to the axis of the first flow channel 110 and the axis of the second flow channel 120 respectively. A positioning groove 220 matching the limit pin 170 is formed on the valve core 200. When the valve core 200 is mounted in the second flow channel 120, the positioning groove 220 is sleeved on the limit pin 170. The limit pin 170 and the positioning groove 220 can limit a moving path of the valve core 200, enabling the valve core 200 to move in the axial direction of the second flow channel 120 and preventing the valve core 200 from rotating relative to the second flow channel 120, thereby avoiding the situation where the valve core outlet 212 occurs shifting and cannot correspond to the first outlet 112.

Likewise, in some embodiments, as shown in FIG. 2, FIG. 4, and FIG. 7, a limit groove is formed in the second flow channel 120, and a positioning pin matching the limit pin 170 is provided on the valve core 200. When the valve core 200 is mounted in the second flow channel 120, the positioning pin is located in the limit groove. The limit groove and the positioning pin can limit a moving path of the valve core 200, enabling the valve core 200 to move in the axial direction of the second flow channel 120 and preventing the valve core 200 from rotating relative to the second flow channel 120, thereby avoiding the situation where the valve core outlet 212 occurs shifting and cannot correspond to the first outlet 112.

In some embodiments, as shown in FIG. 2, FIG. 4, and FIG. 7, the positioning pin and/or the positioning groove 220 are provided on the valve core side wall 230 of the valve core 200 that is spaced 90° apart from the valve core outlet 212. Correspondingly, the limit pin 170 and/or the limit groove are provided on an inner wall of the valve seat 100 that is perpendicular to an axis of the first outlet 112.

As an optional implementation, as shown in FIG. 4 and FIG. 6, a limit pin hole 171 is formed in the second flow channel 120, and the limit pin 170 is connected to the limit pin hole 171 in an interference fit manner.

In some embodiments, as shown in FIG. 4 and FIG. 6, the limit pin hole 171 is formed in the second flow channel 120, and the limit pin 170 is connected to the limit pin hole 171 in an interference fit manner, thereby fixing the limit pin 170 inside the second flow channel 120. The limit pin 170 can be mounted in the second flow channel 120 through the limit pin hole 171 after mounting the structures such as the holder 300, thus preventing the premature installation of the limit pin 170 from interfering with the installation of the structures such as the holder 300.

As an optional implementation, a length of the limit groove and/or the positioning groove 220 is greater than or equal to a movement distance of the valve core 200 relative to the second flow channel 120.

In some embodiments, by setting the length of the limit groove and/or the positioning groove 220 to be greater than or equal to the movement distance of the valve core 200 relative to the second flow channel 120, the limit groove and/or the positioning groove 220 can be prevented from affecting the movement distance of the valve core 200 and interfering with the action of the elastic reset member 400 on the valve core 200.

In the above-described embodiments of the present application, optionally, as shown in FIG. 2 to FIG. 5, a height of the valve core 200 in the axial direction of the second flow channel 120 is less than or equal to a distance between a lowest point of the first flow channel 110 and the circlip 500, such that when the elastic reset member 400 is in an unstretched state, the valve core top wall 240 of the valve core 200 does not extend beyond the lowest point of the first flow channel 110, thereby keeping the first flow channel 110 between the first inlet 111 and the second outlet unobstructed.

Optionally, as shown in FIG. 2 to FIG. 5, the height of the valve core 200 in the axial direction of the second flow channel 120 is greater than an inner diameter of the first flow channel 110, and a diameter of the valve core outlet 212 is greater than or equal to the inner diameter of the first flow channel 110. This ensures that when the elastic reset member 400 is in a stretched state and the valve core 200 moves to abut against the movable side wall 160 of the valve seat 100, the valve core 200 can completely block off the part of the first flow channel 110 corresponding to the first inlet 111 when the second inlet 121 is in communication with the first outlet 112, thus ensuring that the channel between the first inlet 111 and the first outlet 112 is closed. Meanwhile, the valve core outlet 212 can fully expose the first flow channel 110 corresponding to the first outlet 112, and ensure the smooth flow of the fluid from the second inlet 121 to the first outlet 112.

Based on a same inventive concept, the embodiments of the present application further provide a fuel cell system. The fuel cell system includes a fuel cell and the aforementioned reversing valve 1000.

Since the fuel cell system provided in the present application includes the reversing valve 1000 according to the above-described technical solutions, the fuel cell system provided in the present application has all the beneficial effects of the above-described reversing valve 1000, which will not be described herein.

In some embodiments, as shown in FIG. 9 and FIG. 10, in the fuel cell system, a switching valve 01, a proportional valve 03, an ejector 04, and a stack inlet for anode reaction gas entering 07 of a stack 08 are connected in sequence via pipelines. A stack outlet for anode reaction gas exiting 09 of the stack 08 is in communication with an inlet of a gas-liquid separator 11 via a pipeline. A liquid discharge port and a nitrogen discharge port of the gas-liquid separator 11 are respectively in communication with a mixed discharge device 15 via pipelines. A gas discharge port of the gas-liquid separator 11 is in communication with a circulating pump 16, the reversing valve 1000, and a secondary flow inlet 05 of the ejector via a gas discharge tee 12; meanwhile, the gas discharge port of the gas-liquid separator 11 is in communication with the reversing valve 1000 and the secondary flow inlet 05 of the ejector via the gas discharge tee 12. A medium-pressure sensor 02 is mounted on a pipeline between the switching valve 01 and the proportional valve 03, a stack inlet low-pressure sensor 06 is mounted on a pipeline between the ejector 04 and the stack inlet for anode reaction gas entering 07, a stack outlet low-pressure sensor 10 is mounted on a pipeline between the stack outlet for anode reaction gas exiting 09 and the gas-liquid separator 11, a drain valve 14 is mounted on a pipeline between the liquid discharge port of the gas-liquid separator 11 and the mixed discharge device 15, and a nitrogen discharge valve 13 is mounted on a pipeline between the nitrogen discharge port of the gas-liquid separator 11 and the mixed discharge device 15. The gas discharge port of the gas-liquid separator 11 is in communication with the gas discharge tee 12, a first tee outlet 19 of the gas discharge tee 12 is in direct communication with the first inlet 111 of the reversing valve 1000 via a pipeline, and a second tee outlet 20 of the gas discharge tee 12 is in communication with the circulating pump 16 and the second inlet 121 of the reversing valve 1000 via a pipeline.

When the fuel cell system operates under a low-power condition, an anode stoichiometric ratio is relatively high and the ejector 04 has an insufficient ejector force. In this case, it is necessary to pressurize the circulating anode reaction gas by the operation of the circulating pump 16, and a flow path of the anode reaction gas is shown by an arrow direction in FIG. 9. Fresh anode reaction gas from an anode reaction gas source passes through the switching valve 01, the proportional valve 03, and the ejector 04 in sequence after decompression. After being ejected by a high-speed nozzle of the ejector 04, the anode reaction gas enters the stack 08 via the stack inlet for anode reaction gas entering 07 to undergo an electrochemical reaction. The anode reaction gas that has completed the electrochemical reaction is discharged through the stack outlet for anode reaction gas exiting 09, and then passes through the gas-liquid separator 11 to separate and remove liquid water, nitrogen, and other gases. The separated anode reaction gas is divided into two anode reaction gas flow paths through the gas discharge tee 12. One of the anode reaction gas flow paths is in communication with the ejector 04 via the circulating pump 16 and the reversing valve 1000 in sequence. An outlet of the circulating pump 16 is in communication with the reversing valve 1000 through the second inlet 121. The anode reaction gas that outputs higher pressure after being pressurized by the circulating pump 16 enters the reversing valve 1000 via the second inlet 121. A pressure of the anode reaction gas generated at the outlet of the circulating pump 16 is denoted as P _{idle}, which shall satisfy a formula P_{idl}·S > F_{preload}+ kL. When the circulating pump 16 is idling, the anode reaction gas generated at the outlet of the circulating pump 16 can push the valve core 200 to move, such that the valve core outlet 212 is in corresponding communication with the first outlet 112. In this case, an outlet pressure of the circulating pump 16 is ≥ P_{idle}. The first inlet 111 is in communication with the first outlet 112 via the valve core 200, and the first outlet 112 is in communication with the secondary flow inlet 05 of the ejector. The circulating anode reaction gas pressurized by the circulating pump 16 enters the ejector 04 through the secondary flow inlet 05 of the ejector, and is driven to be pressurized by the high-speed jet gas from the nozzle of the ejector 04. After being mixed with the fresh anode reaction gas, it enters the stack 08 again through the stack inlet for anode reaction gas entering 07 to participate in the electrochemical reaction. The other anode reaction gas flow path is in communication with the ejector 04 via the reversing valve 1000. As the valve core 200 moves to a position where the valve core outlet 212 corresponds to the first outlet 112, the valve core 200 blocks off the part of the first flow channel 110 corresponding to the first inlet 111, and in this case, the communication between the first inlet 111 and the first outlet 112 is disconnected.

When the fuel cell system operates under medium and high-power conditions, the anode stoichiometric ratio is relatively low, and the ejector 04 operating alone can meet a pressurization requirement of circulating hydrogen, allowing the circulating pump 16 to stop operating to reduce the power consumption of the circulating pump 16. At this time, the valve core 200 is maintained in a state where the first inlet 111 is in communication with the first outlet 112 under the action of the preload force of the elastic reset member 400, and a flow path of the anode reaction gas is shown by an arrow direction in FIG. 10. Fresh anode reaction gas from an anode reaction gas source passes through the switching valve 01, the proportional valve 03, and the ejector 04 in sequence after decompression. After being ejected by a high-speed nozzle of the ejector 04, the anode reaction gas enters the stack 08 via the stack inlet for anode reaction gas entering 07 to undergo an electrochemical reaction. The anode reaction gas that has completed the electrochemical reaction is discharged through the stack outlet for anode reaction gas exiting 09, and then passes through the gas-liquid separator 11 to separate and remove liquid water, nitrogen, and other gases. The separated anode reaction gas is divided into two anode reaction gas flow paths through the gas discharge tee 12. One of the anode reaction gas flow paths is in communication with the ejector 04 via the reversing valve 1000. As the valve core 200 is maintained in the state where the first inlet 111 is in communication with the first outlet 112 under the action of the preload force of the elastic reset member 400, the circulating anode reaction gas directly enters the first flow channel 110 via the first inlet 111, can flow into the secondary flow inlet 05 of the ejector via the first outlet 112, and is driven to be pressurized by the high-speed jet gas from the nozzle of the ejector 04. After being mixed with the fresh anode reaction gas, it enters the stack 08 again through the stack inlet for anode reaction gas entering 07 to participate in the electrochemical reaction. The other anode reaction gas flow path is in communication with the ejector 04 via the circulating pump 16 and the reversing valve 1000 in sequence. The outlet of the circulating pump 16 is in communication with the reversing valve 1000 via the second inlet 121. Since the circulating pump 16 stops operating, the pressure of the anode reaction gas at the second inlet 121 is less than F_{preload} + KI, which is insufficient to push the valve core 200 to move relative to the valve seat 100. The valve core 200 is maintained in its initial state under the action of the elastic reset member 400, that is, the valve core outlet 212 is blocked off by the inner wall of the second flow channel 120 and is not in communication with the first outlet 112.

In the above-described embodiments, as shown in FIG. 9 and FIG. 10, the medium-pressure sensor 02 is configured to detect the pressure of the anode reaction gas at a front end of the proportional valve 03; the stack inlet low-pressure sensor 06 is configured to detect the stack inlet pressure of the anode reaction gas; the stack outlet low-pressure sensor 10 is configured to detect the stack outlet pressure of the anode reaction gas; the nitrogen discharge valve 13 is configured to periodically discharge impure reaction gas in the cathode reaction gas pipeline; and the drain valve 14 is configured to periodically discharge the liquid water collected in the gas-liquid separator 11. The discharged impure reaction gas and liquid water are discharged through the mixed discharge device 15.

In the present application, unless otherwise expressly specified and defined, a first feature being "above" or "below" a second feature may include not only direct contact between the first and second features but also indirect contact between the first and second features via another feature between them. Furthermore, that the first feature is "over", "above", or "on" the second feature includes that the first feature is directly above and diagonally above the second feature, or merely means that the first feature is higher in level than the second feature. That the first feature is "beneath", "below", or "under" the second feature includes that the first feature is directly below and diagonally below the second feature, or merely means that the first feature is lower in level than the second feature.

In the description of the present application, it should be understood that the orientations or positional relationships indicated by the terms "center", "longitudinal", "transverse", "length", "width", "thickness, "up", "down", "front", "back", "left", "right", "vertical", "horizontal", "top", "bottom", "inside", "outside", "clockwise", and "counter-clockwise" are based on those shown in the accompanying drawings and intended only for the convenience of describing the present application and simplifying the description rather than for indicating or implying that the referred device or element must be provided with a particular orientation or constructed and operated with a particular orientation; therefore, they should not be construed as limiting the present application.

**It** should be noted that, all directional indications in the embodiments of the present invention are only intended for explaining a relative position relationship, a motion condition, etc., between components in a certain posture, and if the posture changes, the directional indications change accordingly.

In the description of the embodiments of the present application, the technical terms "connection" and "fixed" should be understood in a broad sense unless there is a specific stipulation and limitation. For example, "connection" may be a fixed connection, may also be a dismountable connection or an integrated connection; may also be a mechanical connection or an electrical connection; and may be a direct connection, an indirect connection through an intermediate medium, a connection within two elements or an interaction relationship between two elements. For a person of ordinary skill in the art, a specific meaning of the foregoing terms in the embodiments of the present application may be understood according to a specific situation.

In addition, descriptions involving "first", "second", and the like in the present application are merely intended for descriptive purposes and should not be construed as indicating or implying their relative importance or implying the quantity of technical features indicated. Therefore, a feature limited by "first" or "second" may explicitly or implicitly include one or more of such features. In the description of the embodiments of the present application, "a plurality of" refers to two or more, unless otherwise expressly and specifically defined.

Although the embodiments of the present application have been shown and described, it may be understood by those of ordinary skill in the art that various changes, modifications, substitutions, and variations can be made to these embodiments without departing from the principle and spirit of the present application, and the scope of the present application is defined by the appended claims and their equivalents.

## Claims

1. A reversing valve, **characterized in that** the control valve comprises:
a valve seat, the valve seat being internally provided with a first flow channel and a second flow channel in communication with and perpendicular to the first flow channel, the valve seat being provided with a first inlet and a first outlet both in communication with the first flow channel, and the valve seat being provided with a second inlet in communication with the second flow channel; and
a valve core, the valve core being internally provided with a third flow channel coaxial with the second flow channel, and the valve core being provided with a valve core inlet and a valve core outlet both in communication with the third flow channel, **characterized in that** an arrangement position of the valve core inlet corresponds to an arrangement position of the second inlet, and the valve core is movably arranged in the second flow channel, such that the valve core outlet is switched between a position corresponding to the first outlet and a position staggered with the first outlet.

2. The reversing valve according to claim 1, **characterized in that** the reversing valve further comprises:
a holder, the holder being arranged in the second flow channel, and the holder being provided with a through hole corresponding to the second inlet; and
an elastic reset member, the elastic reset member being connected between the valve core and the holder, and the elastic reset member keeping the valve core outlet in the position staggered with the first outlet by means of a preload force.

3. The reversing valve according to claim 2, **characterized in that** the reversing valve further comprises a circlip, a circlip groove is formed in the second flow channel, the circlip groove is located between the holder and the valve core, and the circlip groove is configured to accommodate the circlip.

4. The reversing valve according to claim 3, **characterized in that** an anti-disengagement retainer ring is arranged in the second flow channel, and the anti-disengagement retainer ring is located on a side of the holder opposite to the circlip groove.

5. The reversing valve according to claim 1, **characterized in that** a cushion pad is arranged on an inner side of a side wall of the valve seat corresponding to the second inlet.

6. The reversing valve according to claim 1, **characterized in that** the side wall of the valve seat corresponding to the second inlet is a movable side wall, and the movable side wall is detachably arranged on the valve seat.

7. The reversing valve according to any one of claims 1 to 6, **characterized in that** a limit pin is arranged on the valve seat, and a positioning groove matched with the limit pin is formed on the valve core; and/or a limit groove is formed on the valve seat, and a positioning pin matched with the limit groove is arranged on the valve core.

8. The reversing valve according to claim 7, **characterized in that** a limit pin hole is formed in the second flow channel, and the limit pin is connected to the limit pin hole in an interference fit manner.

9. The reversing valve according to claim 7, **characterized in that** a length of the limit groove and/or the positioning groove is greater than or equal to a movement distance of the valve core relative to the second flow channel.

10. A fuel cell system, **characterized in that** the fuel cell system comprises a fuel cell and the reversing valve according to any one of claims 1 to 9.
